# EUROPÄISCHE PATENTSCHRIFT

(11) **EP 4 467 892 B1**
(45) Veröffentlichungstag und Bekanntmachung des Hinweises auf die Patenterteilung: **29.07.2026**
(21) Anmeldenummer: 24168039.6
(22) Anmeldetag: 02.04.2024
(51) Int. Cl.: F24S 25/634, F24S 25/613, F24S 25/636, H02S 20/10

(54) **DACHHAKEN ZUR BEFESTIGUNG VON EINER UNTERKONSTRUKTION EINES AUFLAGEELEMENTS MIT EINER DACHKONSTRUKTION**
ROOF HOOK FOR FIXING A SUBSTRUCTURE OF A SUPPORT ELEMENT WITH A ROOF CONSTRUCTION
CROCHET DE TOIT POUR FIXER UNE SOUS-STRUCTURE D'UN ÉLÉMENT DE SUPPORT AVEC UNE STRUCTURE DE TOIT

(30) Priorität: 26.05.2023 DE 102023113908
(43) Veröffentlichungstag der Anmeldung: 27.11.2024
(73) Patentinhaber: AEROCOMPACT Group Holding AG, 1010 Wien (AT)
(72) Erfinder: Burger, Markus M., 6791 St. Gallenkirch (AT)
(74) Vertreter: Patent- und Rechtsanwälte Behrmann Wagner PartG mbB

(56) Entgegenhaltungen:
- EP-A1- 2 527 762
- EP-A2- 2 733 439
- BR-A2- 102021 013 234
- DE-U1- 202007 003 060
- US-A1- 2009 025 313

## Beschreibung

Die vorliegende Erfindung betrifft einen Dachhaken zur Befestigung von einer Unterkonstruktion, bevorzugt einer Montageschiene, für Auflageelemente, insbesondere Photovoltaik- und/oder Solarthermie-Paneele, mit oder an einer Dachkonstruktion nach dem Oberbegriff des Anspruchs 1.

Gattungsgemäße Dachhaken, insbesondere Schrägdachhaken, dienen als Montage- oder Verbindungselemente zwischen Auflageelementen und einer Dachkonstruktion, wobei regelmäßig zunächst eine Unterkonstruktion, beispielsweise aus Montage- oder Profilschienen erstellt wird, die mehrere Dachhaken miteinander verbinden, bevor die Auflageelemente auf der Unterkonstruktion befestigt werden. Dabei sollen die Auflageelemente einerseits oberhalb einer Dacheindeckung angeordnet werden und andererseits soll die Last dieser Auflageelemente durch die darunterliegende Dachunterkonstruktion getragen werden. Bei solchen Auflageelementen handelt es sich bevorzugt um plattenförmige Photovoltaik- und/oder Solarthermie-Paneele, die vorzugsweise auf einer Montageschiene montierbar sind. Bei den Dachkonstruktionen befindet sich regelmäßig ein hölzerner Dachstuhl als Dachunterkonstruktion und Dachpfannen oder Dachziegel als Dacheindeckung, die bei der Montage der Dachhaken berücksichtigt werden müssen.

Für diesen Verwendungszweck weist der Dachhaken einen Bügelträger zum wenigstens teilweise Umgreifen der Dacheindeckung auf. Die Bügelträger sind so geformt, dass die Dacheindeckung nach der Montage der Dachhaken vollständig oder weitestgehend - gegebenenfalls nach minimaler Bearbeitung einzelner Dachpfannen zum Durchtritt des Bügelträgers - wiederhergestellt und das Dach vollständig eingedeckt wird.

Weiterhin kann der Dachträger einen Grundträger zur Auflage auf der Dachunterkonstruktion aufweisen, der nach Möglichkeit die Montage des Dachhakens so flexibel in drei Raumrichtungen ermöglicht, dass keine oder nur minimale Bearbeitung der Dacheindeckung/Dachpfannen zur Wiederherstellung der Dacheindeckung nach der Montage der Dachhaken nötig ist.

Auf einer Dachunterkonstruktion und oder dem Grundträger abgewandten Ende des Dachhakens weisen die gattungsbildenden Vorrichtungen bereits Schienenaufnahmen auf, in die die Montageschienen aufgenommen und befestigt werden können. Die bisher bekannten Schienenaufnahmen sind dabei teilweise schon so gestaltet, dass, bevorzugt händisch oder manuell, ein Verrasten, Einklippen und/oder Vormontieren der Montageschienen möglich ist, dass bereits eine erste wenn auch nicht ausreichend wiederstandfähige Befestigung/Klemmung der Montageschienen an den Dachhaken oder Bügelträgern erlaubt. Weiterhin ist bereits bekannt die vormontierten Montageschienen endgültig über Sicherungsmittel, beispielsweise Sicherungsschrauben zu befestigen/zu sicher, wobei die Sicherungsmittel die Befestigung oder Haltekraft der eingeklippten/eingerasteten Montageschienen verbessert/erhöht.

Dazu werden im Stand der Technik mehrteilige Schienenaufnahmen verwendet, die neben dem Sicherungsmittel regelmäßig auch Vorspannmittel, beispielsweise Federn, und mit den Sicherungsmitteln am Bügelträger befestigte separate Klemmblöcke umfassen. Diese Lösungen führen zu einem hohen Fertigungs- und Montageaufwand, da viele Einzelteile hergestellt und montiert/vormontiert werden müssen.

US 2009/025313 A1 und EP 2 733 439 A2 beschreiben Dachhaken gemäß dem Oberbegriff des Anspruchs 1.

Der vorliegenden Erfindung liegt die Aufgabe zugrunde, einen Dachhaken vorzuschlagen, der die Nachteile im Stand der Technik überkommt und insbesondere eine Materialersparnis sowie eine Verringerung der Einzelteile des Dachhakens erreicht.

Diese Aufgabe wird hinsichtlich des Dachhakens mit den Merkmalen des unabhängigen Anspruchs 1 gelöst.

Vorteilhafte Ausführungsformen sind Gegenstand der nachfolgenden Beschreibung, der Figurenbeschreibung der Figuren und der Unteransprüche. Nachfolgend sollen alle vorrichtungsmäßig offenbarten Merkmale auch als verfahrensmäßig offenbart und beanspruchbar gelten, und umgekehrt.

Erfindungsgemäß wird ein Dachhaken zur Befestigung von einer Unterkonstruktion, bevorzugt einer Montageschiene, für Auflageelemente, insbesondere Photovoltaik- und/oder Solarthermie-Paneele, mit einer Dachunterkonstruktion beansprucht, bei dem der Dachhaken einen Bügelträger zum Umgreifen einer Dacheindeckung aufweist und der zudem in Weiterbildung des Stands der Technik an einem ersten, insbesondere von der Dachunterkonstruktion beabstandeten, Ende eine einteilige, monolithisch mit dem Bügelträger ausgebildete Schienenaufnahme zur Aufnahme einer Montageschiene einer Unterkonstruktion ausbildet.

In überraschender Weise hat die Erfindung erkannt, dass es auch bei einer einteiligen, monolithischen Ausbildung der Schienenaufnahme möglich ist, diese gleichzeitig so stabil auszubilden, dass dauerhaft eine ausreichende Stabilität des Dachhakens erreicht und eine Haltewirkung auf die Montageschiene ausgeübt werden kann, die Schienenaufnahme dabei gleichzeitig aber so verformbar, bevorzugt elastisch oder teilelastisch verformbar, ist, dass ein Einklippen/Verrasten der Montageschiene in einem Montage- oder Vormontageschritt möglich ist, ohne dass eine mehrteilige Konstruktion, nötig ist. Dadurch wird in wesentlicher Weise die Produktion und Montage des Bügelträgers vereinfacht, da dieser dann vollständig oder zum Teil unter Einbeziehung der Schienenaufnahme als einteiliges, monolithisches Bauteil ausgeführt werden kann. Somit kann der Bügelträger oder zumindest ein Teil des Bügelträgers samt der Schienenaufnahme zum Beispiel als einzelnes Strangpressbauteil gefertigt werden, welches keine oder nur unwesentliche Nachbearbeitung bedarf und somit schnell kostengünstig und effizient hergestellt und zu einem entsprechenden Dachhaken montiert oder vormontiert werden kann.

Wie bereits angedeutet kann der Dachhaken und insbesondere der Bügelträger aus Metall gefertigt sein. Besonders bevorzugt ist der Bügelträger als Strangpressbauteil ausgebildet. Beispielsweise kommt Aluminium als entsprechender Werkstoff zum Einsatz.

Gemäß der Erfindung ist vorgesehen, dass die einteilige Schienenaufnahme zwischen einer Öffnungsposition und einer Sicherungsposition verformbar ist. Weiter vorteilhaft kann vorgesehen sein, dass die Schienenaufnahme so ausgebildet oder gefertigt ist, dass sie in einem entspannten oder nicht kraftbeuafschlagtem Zustand die Öffnungsposition einnimmt. Weiter vorteilhaft kann dann, bevorzugt beim händischen Einrasten oder Einklippen einer Montageschiene in die Schienenaufnahme eine solche Verformung der Schienenaufnahme herbeigeführt werden, dass die Schienenaufnahme trotz ihrer einteiligen monolithischen Ausbildung als Teil des Bügelträgers in die Sicherungsposition überführt wird, in der zumindest eine Grundsicherung oder Grundbefestigung der Montageschiene erreicht wird.

Weiterhin kann gemäß einer vorteilhaften Weiterbildung vorgesehen sein, dass die Schienenaufnahme eine im Wesentlichen u-förmige Kontur mit einem ersten längeren und einem zweiten kürzeren Schenkel aufweist. Dies ermöglicht in vorteilhafter Weise eine elastische oder teilelastische Verformung der Schenkel zueinander und damit eine Überführung der Schienenaufnahme von einer Öffnungsposition in eine Sicherungsposition. Die im wesentlichen u-förmige Kontur kann vorteilhaft in einem Bodenbereich oder einem seitlichen Abschnitt in den angrenzenden Teil des Bügelträgers übergehen. Dieser Übergang ist dann gerade auch einstückig oder monolithisch. Der längere Schenkel kann vorteilhaft das Einrasten oder Einklippen der Montageschiene erleichtern.

Ebenfalls kann in weiterbildenden Ausführungsformen vorgesehen sein, dass die Schienenaufnahme drei Befestigungskonturen zur, bevorzugt klemmenden, Befestigung der Montageschiene aufweist. Insbesondere kann vorgesehen sein, dass eine erste Befestigungskontur zum Anlegen und Widerlagern einer Montageschiene in der Öffnungsposition der Schienenaufnahme dient. Die zweite und dritte Befestigungskontur können dann bei der Verformung der Schienenaufnahme zur Erreichung der Sicherungsposition mit der Montageschiene in Eingriff gebracht werden. Dazu kann vorteilhaft vorgesehen sein, dass die Montageschiene eine Schwenk- und/oder Rotationsbewegung um eine Achse parallel zu einer Längsachse der Montageschiene vollführt. Die dazu notwendige Kraft kann vorteilhaft händisch und/oder werkzuglos aufgebracht werden.

Erfindungsgemäß ist vorgesehen, dass die Schienenaufnahme zwei einander zugewandte Auflagestege aufweist, wobei die Auflagestege im der Öffnungsposition in einem stumpfen Winkel zueinander angeordnet sind und in einer Sicherungsposition parallel zueinander angeordnet sind. Die Auflagestege können bevorzugt an den Schenkeln einer u-förmigen Schienenaufnahme nach innen oder aufeinander zu angeordnet sein und ebenfalls monolithisch mit der Schienenaufnahme ausgebildet sein. Der Winkel der Auflagestege zueinander entspricht vorteilhaft dem Gesamtmaß an Verformung der Schienenaufnahme bei der Überführung von der Öffnungsposition in die Sicherungsposition. In diesem Fall können vorteilhaft in der Sicherungsposition der Schienenaufnahme die beiden Auflagestege flächig oder bündig mit einer Unterseite der Montageschiene zur Anlage kommen und eine stabile Abstützung der Montageschiene ermöglichen.

In einer weiteren vorteilhaften Variante kann vorgesehen sein, dass die die Schienenaufnahme mit einem Sicherungsmittel, bevorzugt einer Sicherungsschraube, sicherbar ist. Das oder die Sicherungsmittel können als separate Bauteile zu der einteilig und monolithisch mit dem Bügelträger verbundenen Schienenaufnahme ausgebildet sei. Die Sicherungsmittel können, bevorzugt über eine Werkzeugaufnahme, beispielsweise einen Innen- oder Außensechskant, mit einem Werkzeug verstellbar gegenüber der Schienenaufnahme ausgebildet sein. Durch die Verstellung können die Sicherungsmittel so eingestellt oder positioniert werden, dass die Schienenaufnahme in der Sicherungsposition gesichert oder verspannt werden. Dadurch kann die endgültige Sicherung der montageschiene erreicht und/oder die Sicherung durch Verrasten/Einklippen unterstützt und/oder verstärkt werden.

Weiterbildend kann zudem vorgesehen sein, dass das Sicherungsmittel dazu eingerichtet sind zwei Schenkel der Schienenaufnahme aufeinander zu kraftzubeaufschlagen. Beispielsweise können sich die Sicherungsmittel durch zwei Bohrungen in den Schenkeln erstrecken oder an solchen Bohrungen abstützen. Dabei kann beispielsweise eine Bohrung als Gewindebohrung ausgebildet sein, so dass ein Einschrauben einer als Sicherungsschraube ausgebildeten Sicherungsmittel dazu führt, dass die Schenkel aufeinander zu kraftbeaufschlagt werden, insbesondere, wenn sich ein Schraubenkopf an einem gegenüberliegenden Schenkel abstützt oder zur Anlage kommt. Alternativ zu einer (Innen-) Gewindebohrung kann auch eine Mutter zusammen mit einer Sicherungsschraube zum Einsatz kommen.

In einer weiteren bevorzugten Ausbildungsvariante kann vorgesehen sein, dass der Bügelträger zweiteilig ausgebildet ist, wobei ein erster Teil des Bügelträgers an einem Ende Verbindungsmittel zur Verbindung mit einem vom Dachhaken umfassten Grundträger zur Auflage auf der Dachunterkonstruktion umfasst, und ein zweiter Teil des Bügelträgers an einem Ende die einteilig, monolithisch mit dem Bügelträger ausgebildete Schienenaufnahme ausbildet. Dies kann besonders sinnvoll sein, um die Größe oder das Volumen des Dachhakens und/oder des Bügelträgers vor der Montage kompakt zu halten. Beispielsweise kann der Bügelträger in einer zweiteiligen Ausführungsform klappbar ausgebildet sein, so dass die Teile vor der Montage in einer ersten kompakten Anordnung zueinander angeordnet und ggf. gesichert sind und im Rahmen der Montage in eine zweite die Bügelform ausbildende Relativanordnung überführt oder umorientiert werden.

Weiterhin kann vorteilhaft vorgesehen sein, dass erste Teil und der zweite Teil des Bügelträgers, bevorzugt in einem Bereich einer maximalen Ausbuchtung des Bügelträgers, lösbar und/oder höhenverstellbar miteinander verbunden sind.

Die Höhenverstellung kann beispielsweise durch gezahnte oder in sonstiger Weise komplementär strukturierte Anlageflächen der Teile erreicht werden, die eine schrittweises Verschieben der Teile gegeneinander erlauben. Der erste Teil und der zweite Teil kann vorteilhaft über ein Sicherungsmittel, bevorzugt eine Sicherungsschraube lösbar miteinander verbunden sein, wobei das/die Sicherungsmittel bevorzugt so angeordnet und ausgebildet sind, dass Anlageflächen des ersten Teils und des zweiten Teils gegeneinander kraftbeaufschlagt werden können.

Weitere Vorteile und Einzelheiten der Erfindung ergeben sich aus der nachfolgenden Beschreibung bevorzugter Ausführungsformen der Erfindung sowie anhand der lediglich schematischen Zeichnungen.

Es zeigen:
- Fig. 1:: eine schematische perspektivische Darstellung eines erfindungsgemäßen Dachhakens mit einer Schienenaufnahme in einer Öffnungsposition;
- Fig. 2:: eine schematische Seitenansicht des Dachakens der Fig. 1;
- Fig. 3:: eine schematische Seitenansicht eines zweiten Teils eines Bügelträgers;
- Fig. 4:: eine schematische Seitenansicht eines erfindungsgemäßen Dachhakens mit einer Schienenaufnahme in einer Sicherungsposition und einer darin gesicherten Montageschiene.

Gleiche Elemente beziehungsweise Elemente mit gleicher Funktion sind in den Figuren und in der nachfolgenden Beschreibung mit den gleichen Bezugsziffern versehen.

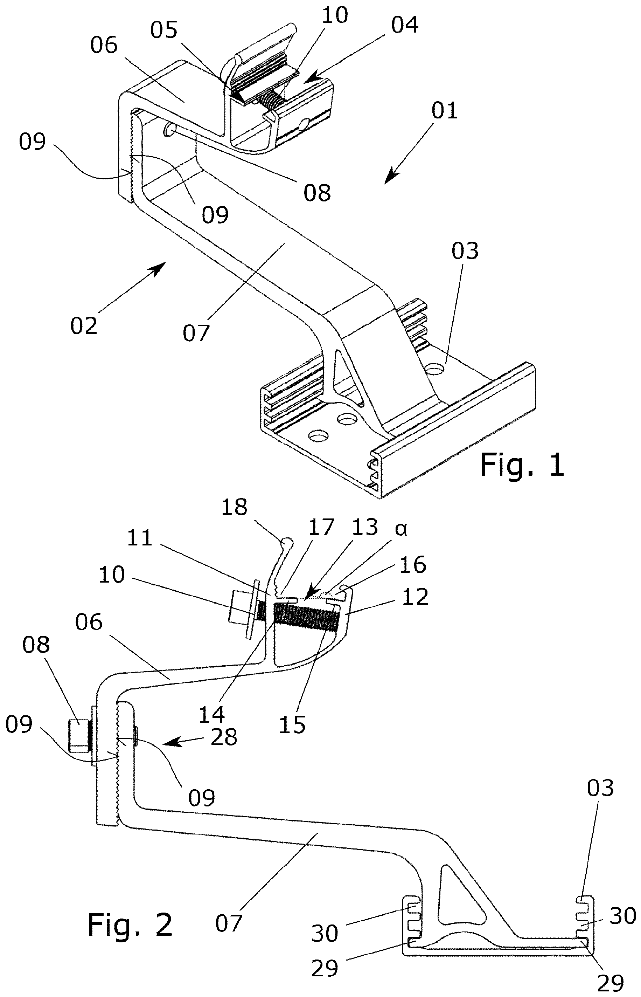

Die Fig. 1 zeigt einen erfindungsgemäßen Dachhaken 01. Der Dachhaken umfasst einen Bügelträger 02 und einen Grundträger 03. Der Grundträger wird mit einer nicht dargestellten Dachunterkonstruktion, beispielsweise mit Dachsparren (nicht gezeigt) verbunden, bevorzugt verschraubt. Der Bügelträger 02 dient zur Vorbeiführung an einer bestehenden/wiederhergestellten Dacheindeckung (ebenfalls nicht dargestellt). An einem Ende 04 des Bügelträgers 02 ist eine Schienenaufnahme 05 für eine Montageschiene einer Unterkonstruktion für Auflageelemente, insbesondere Photovoltaik- und/oder Solarthermie-Paneele, ausgebildet. Diese Schienenaufnahme 05 ist einteilig und monolithisch mit dem Bügelträger 02, insbesondere einem zweiten Teil 06 des Bügelträgers 02 ausgebildet.

Um eine kompakte platzsparende und Transportkonfiguration des Dachhakens und gleichzeitig eine Höhenverstellung des Bügelträgers 02 zu ermöglichen umfasst der Bügelträger 02 einen ersten Teil 07 und den bereits genannten zweiten Teil 06, der auch die Schienenaufnahme monolithisch und einteilig mit dem zweiten Teil 06 ausbildet. Der erste Teil und der zweite Teil sind über ein erstes Sicherungsmittel 08, bevorzugt eine Sicherungsschraube miteinander verbunden. In der Ausführungsform der Fig. 1 sind gezahnte Anlageflächen 09 vorgesehen, die eine schrittweise Höhenverstellung der Teile 06, 07 des Bügelträges 02 und eine definierte Relativanordnung der Teile 06,07 zueinander in einem befestigten Zustand ermöglichen. Durch ein Lösen oder teilweises Lösen der Sicherungsmittel 08 kann der zweite Teil 06 zur Herstellung einer Transportkonfiguration gegenüber der dargestellten Position um eine Längsachse des Sicherungsmittels 08 nach unten geklappt/geschwenkt werden (nicht dargestellt). Es ist erkennbar, dass die Teile 06, 07 in einem Bereich 28 maximaler Ausbuchtung des Bügelträgers 02 lösbar und/oder höhenverstellbar miteinander verbunden sind.

In der Darstellung der Fig. 1 ist die Schienenaufnahme 05 in einer Öffnungsposition dargestellt, die vorteilhaft der Position entspricht, in der das zweite Teil 06 in einem unbelasteten, nicht vorgespannten Zustand vorliegt. In die Schienenaufnahme 05 kann in der dargestellten Öffnungsposition eine Montageschiene eingesetzt und die Schienenaufnahme 05 zusammen mit der Montageschiene in eine Sicherungsposition überführt werden, in der ein Einrasten oder Einklippen der Montageschiene erreicht wird. Diese Überführung erfolgt. ohne dass die Schienenaufnahme 05 mehrteilig ausgebildet ist, nur durch die elastische oder teilelastische Verformung der Schienenaufnahme 05.

Um die Montageschiene endgültig und dauerhaft zu sichern oder zu befestigen, wirkt die Schienenaufnahme mit zweiten Sicherungsmitteln 10 zusammen, die ebenfalls als Sicherungsschraube ausgebildet sein können.

In der Seitendarstellung der Fig. 2 ist gut erkennbar, dass sich in der dargestellten Ausführungsform die zweiten Sicherungsmittel 10 dazu eigenen zwei Schenkel 11, 12 eines im wesentlichen u-förmigen Profils 13 der Schienenaufnahme mit einer Kraft, insbesondere einer Zugkraft zu beaufschlagen. Das u-förmige Profil 13 der Schienenaufnahme umfasst einen längeren Schenkel 11 und einen kürzeren Schenkel 12. Das u-förmige Profil 13 bildet ebenfalls monolithisch zwei nach innen gerichtete oder einander zugewandt ausgebildete Auflagestege 14, 15 aus. Diese Auflagestege 14, 15 sind in der Öffnungsposition der Schienenaufnahme 05 in einem stumpfen Winkel α zueinander angeordnet.

Die Schienenaufnahme 05 weist bevorzugt drei Befestigungskonturen 16, 17, 18 auf. Bevorzugt ist eine erste Befestigungskontur 16 an dem kürzeren Schenkel 12 ausgebildet und ermöglicht ein Einsetzen und/oder Einhaken eines entsprechenden Gegenstücks oder Gegenprofils einer Montageschiene. Der längere Schenkel 11 kann vorteilhaft zwei weitere Befestigungskonturen aufweisen, die mit der Montageschiene und dortigen Gegenkonturen in Eingriff bringbar sind, wenn die Schienenaufnahme 05 zusammen mit der Montageschiene aus der Öffnungsposition in die Verschlussposition überführt werden.

In der Seitenansicht der Fig. 2 sind auch die an einem Ende des ersten Teil 07 angeordneten Verbindungsmittel 29 dargestellt, die als Federn oder Stege ausgebildet sind und die zur Verbindung mit dem Grundträger 02 dienen, indem die Verbindungmittel 29 in entsprechende Nuten 30 eingreifen.

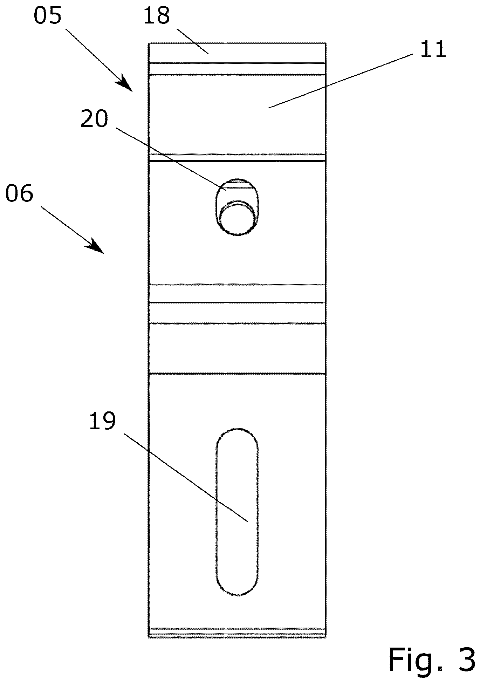

In der Darstellung der Fig. 03 ist der zweite Teil 06 des Bügelträgers isoliert in einer Seitenansicht dargestellt. Darin ist zu erkennen, dass der zweite Teil 06 zwei Langlöcher 19, 20 aufweist. Die Langlöcher dienen zur Aufnahme und/oder Führung der ersten und zweiten Sicherungsmittel 08, 10. Das erste Langloch 19 ermöglicht die Veränderung der Relativanordnung oder Höhenverstellung des zweiten Teils 06 gegenüber dem ersten Teil 07 im Umfang der Erstreckung des Langlochs 19. Das Langloch 20 ermöglicht ein Kippen des zweiten Sicherungsmittels 10. Denn das zweite Sicherungsmittel 10 ist so geführt, dass es im Sicherungszustand der Schienenaufnahme 05 mit einer Längsachse im Wesentlichen rechtwinklig zu den Schenkeln 11, 12 oder einem Teil der Schenkel 11, 12, der u-förmigen Schienenaufnahme 05 verläuft. Um dies zu erreichen ist es aber vorteilhaft, wenn das zweite Sicherungsmittel 10 in der Öffnungsposition der Schienenaufnahme 05 leicht verkippt gegenüber dem längeren Schenkel 11angeordnet verläuft, wie in der Fig. 2 erkennbar.

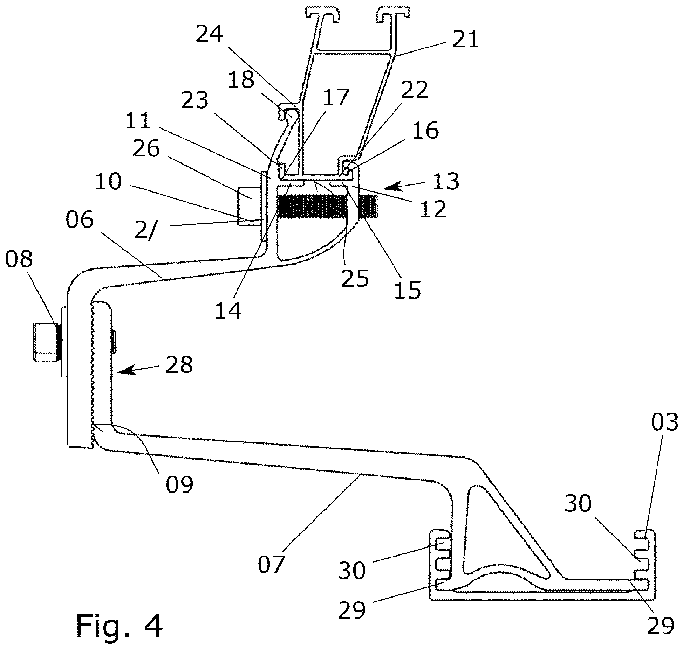

In der Fig. 4 ist neben dem Dachhaken 01 auf eine mit dem Dachhaken 01 verbundene und darin gesicherte Montageschiene 21 dargestellt. Um die Montageschiene 21 in den Zustand der Fig. 4 zu bringen kann die Montageschiene 21 zunächst, im Zustand des Dachhakens 01 gemäß Fig. 1 und 2, mit einer ersten Gegenkontur 22 in der ersten Befestigungskontur 16 in Eingriff gebracht werden. Daraufhin wird über eine Bewegung der Montageschiene 18, bevorzugt händisch oder werkzeuglos, die monolithisch mit dem zweiten Teil 06 des Bügelträgers 02 ausgebildete Schienenaufnahme 05 so elastisch oder teilelastisch verformt, dass auch die Gegenkonturen 23, 24 der Montageschiene 21 mit den Befestigungskonturen 17, 18 im Eingriff stehen. Dies führt zu einem Einrasten oder Einklippen der Montageschiene 21 an oder in der Schienenaufnahme 05. Um die Montageschiene 21 endgültig zu sichern, kann anschließend das zweite Sicherungsmittel 10 betätigt, insbesondere angezogen, werden. Dadurch werden die Schenkel 11, 12 zusätzlich aufeinander zu kraftbeaufschlagt und die Klemm- und Haltewirkung auf die Montageschiene 21 wir erhöht oder vergrößert. Durch die zusätzliche Haltekraft über das Sicherungsmittel 10 wird ein unbeabsichtigtes Lösen der Montageschiene 21 verhindert.

In der Darstellung der Fig. 4 ist zu erkennen, dass durch die Verformung der einteiligen Schienenaufnahme 05 die Auflagestege 14, 15 in eine parallele, bevorzugt planparallele, Anordnung überführt wurden, so dass eine Unterseite 25 der Montageschiene 21 auf den Auflagestegen 14, 15 plan zur Anlage kommen kann. Weiterhin ist dargestellt, dass das zweite Sicherungsmittel 10 mit einer Längsachse im Wesentlichen rechtwinklig zu den Schenkeln 11, 12 verläuft, so dass sich der Kopf 26 des Sicherungsmittels 10 oder eine entsprechende Unterlegscheibe 27 plan an dem längeren Schenkel 11 abstützen kann.

### Bezugszeichenliste

- 01: Dachhaken
- 02: Bügelträger
- 03: Grundträger
- 04: Ende des Bügelträger
- 05: Schienenaufnahme
- 06: zweiter Teil des Bügelträgers
- 07: erster Teil des Bügelträgers
- 08: erstes Sicherungsmittel
- 09: Anlagefläche
- 10: zweites Sicherungsmittel
- 11: längerer Schenkel
- 12: kürzerer Schenkel
- 13: u-förmiges Profil
- 14: Steg
- 15: Steg
- 16: erste Befestigungskontur
- 17: zweite Befestigungskontur
- 18: dritte Befestigungskontur
- 19: erstes Langloch
- 20: zweites Langloch
- 21: Montageschiene
- 22: erste Gegenkontur
- 23: Gegenkontur
- 24: Gegenkontur
- 25: Unterseite
- 26: Kopf
- 27: Unterlegscheibe
- 28: Bereich maximaler Ausbuchtung
- 29: Verbindungsmittel
- 30: Nut

## Patentansprüche

1. Dachhaken zur Befestigung von einer Unterkonstruktion, bevorzugt einer Montageschiene (21), für Auflageelemente, insbesondere Photovoltaik- und/oder Solarthermie-Paneele, mit einer Dachunterkonstruktion, wobei der Dachhaken (01) einen Bügelträger (02) zum Umgreifen einer Dacheindeckung aufweist, wobei der Bügelträger (02) an einem ersten, insbesondere von der Dachunterkonstruktion beabstandeten, Ende (04) eine einteilige, monolithisch mit dem Bügelträger (02) ausgebildete Schienenaufnahme (05) zur Aufnahme einer Montageschiene (21) einer Unterkonstruktion ausbildet, wobei die einteilige Schienenaufnahme (05) zwischen einer Öffnungsposition und einer Sicherungsposition verformbar ist, **dadurch gekennzeichnet, dass** die Schienenaufnahme (05) zwei einander zugewandte Auflagestege (14, 15) aufweist, wobei die Auflagestege (14, 15) in der Öffnungsposition der Schienenaufnahme (05) in einem stumpfen Winkel zueinander angeordnet sind und in einer Sicherungsposition der Schienenaufnahme (05) parallel zueinander angeordnet sind.

2. Dachhaken nach Anspruch 1,
**dadurch gekennzeichnet,**
**dass** die Schienenaufnahme (05) eine im Wesentlichen u-förmiges Profil (13) mit einem ersten längeren und einem zweiten kürzeren Schenkel (11, 12) aufweist.

3. Dachhaken nach Anspruch 1 oder 2,
**dadurch gekennzeichnet,**
**dass** die Schienenaufnahme (05) drei Befestigungskonturen (16, 17, 18) zur, bevorzugt klemmenden, Befestigung der Montageschiene (21) aufweist.

4. Dachhaken nach einem der vorhergehenden Ansprüche,
**dadurch gekennzeichnet,**
**dass** die Schienenaufnahme (05) mit einem Sicherungsmittel (10), bevorzugt einer Sicherungsschraube, sicherbar ist.

5. Dachhaken nach Anspruch 4,
**dadurch gekennzeichnet,**
**dass** das Sicherungsmittel (10) dazu eingerichtet ist zwei Schenkel (11, 12) der Schienenaufnahme (05) aufeinander zu kraftzubeaufschlagen.

6. Dachhaken nach einem der vorhergehenden Ansprüche,
**dadurch gekennzeichnet,**
**dass** der Bügelträger (02) zweiteilig ausgebildet ist, wobei ein erster Teil (07) des Bügelträgers (02) an einem Ende Verbindungsmittel (29) zur Verbindung mit einem vom Dachhaken umfassten Grundträger (03) zur Auflage auf der Dachunterkonstruktion umfasst, und ein zweiter Teil (06) des Bügelträgers (02) an einem Ende (04) einteilige, monolithisch mit dem Bügelträger (02), insbesondre mit dem zweiten Teil (06), ausgebildete Schienenaufnahme (05) ausbildet.

7. Dachhaken nach Anspruch 6,
**dadurch gekennzeichnet**,
der erste Teil (07) und der zweite Teil (06) des Bügelträgers (02), bevorzugt in einem Bereich (28) einer maximalen Ausbuchtung des Bügelträgers (02), lösbar und/oder höhenverstellbar miteinander verbunden sind.

## Claims

1. A roof hook for fastening a substructure, preferably a mounting rail (21), for support elements, in particular photovoltaic and/or solar thermal panels, to a roof substructure, the roof hook (01) having a bracket carrier (02) for engaging around a roof covering, the bracket carrier (02) realizing a one-piece rail accommodation (05) at a first end (04), which is in particular spaced apart from the roof substructure, said one-piece rail accommodation (05) being realized monolithically with the bracket carrier (02) and serving to accommodate a mounting rail (21) of a substructure, the one-piece rail accommodation (05) being deformable between an opening position and a securing position, **characterized in that** the rail accommodation (05) has two support webs (14, 15) facing each other, the support webs (14, 15) being disposed at an obtuse angle with respect to each other in the opening position of the rail accommodation (05) and being disposed parallel to each other in a securing position of the rail accommodation (05).

2. The roof hook according to claim 1,
**characterized in that**
the rail accommodation (05) has a profile (13) which is essentially U-shaped and has a first longer and a second shorter leg (11, 12).

3. The roof hook according to claim 1 or 2,
**characterized in that**
the rail accommodation (05) has three fastening contours (16, 17, 18) for fastening the mounting rail (21), preferably in a clamping manner.

4. The roof hook according to any one of the preceding claims, **characterized in that**
the rail accommodation (05) is securable by means of a securing means (10), preferably a securing screw.

5. The roof hook according to claim 4,
**characterized in that**
the securing means (10) is configured to apply force to two legs (11, 12) of the rail accommodation (05) so that they move toward each other.

6. The roof hook according to any one of the preceding claims, **characterized in that**
the bracket carrier (02) is realized in two parts, a first part (07) of the bracket carrier (02) comprising connection means (29) at an end, said connection means (29) serving to be connected to a base carrier (03) which is comprised by the roof hook and serves to be supported by the roof substructure, and a second part (06) of the bracket carrier (02) realizing the one-piece rail accommodation (05) at an end (04), said one-piece rail accommodation (05) being realized monolithically with the bracket carrier (02), in particular with the second part (06).

7. The roof hook according to claim 6,
**characterized in that**
the first part (07) and the second part (06) of the bracket carrier (02), preferably an area (28) of maximum bulging of the bracket carrier (02), are connected to each other in a detachable and/or height-adjustable manner.

## Revendications

1. Crochet de toit pour la fixation d'une sous-structure, de préférence d'un rail de montage (21), pour des éléments d'appui, notamment des panneaux photovoltaïques et/ou solaires thermiques, avec une sous-structure d'un toit, le crochet de toit (01) ayant un support (02) en forme d'étrier pour venir en prise autour d'une toiture, le support (02) en forme d'étrier réalisant un logement de rail (05) monobloc d'une première extrémité (04), qui est notamment espacée de la sous-structure du toit, ledit logement de rail (05) monobloc étant réalisé de manière monolithique avec le support (02) en forme d'étrier et servant à loger un rail de montage (21) d'une sous-structure, le logement de rail (05) monobloc étant déformable entre une position d'ouverture et une position d'arrêt, **caractérisé en ce que** le logement de rail (05) a deux traverses d'appui (14, 15) orientées l'une vers l'autre, les traverses d'appui (14, 15) étant disposées l'une par rapport à l'autre selon un angle obtus dans la position d'ouverture du logement de rail (05) et étant disposées parallèlement l'une par rapport à l'autre dans une position d'arrêt du logement de rail (05).

2. Crochet de toit selon la revendication 1,
**caractérisé en ce que**
le logement de rail (05) a un profil (13) qui est essentiellement en forme de U et a une première branche plus longue et une deuxième branche plus courte (11, 12).

3. Crochet de toit selon la revendication 1 ou 2,
**caractérisé en ce que**
le logement de rail (05) a trois contours de fixation (16, 17, 18) pour fixer le rail de montage (21), de préférence par serrage.

4. Crochet de toit selon l'une quelconque des revendications précédentes,
**caractérisé en ce que**
le logement de rail (05) est capable d'être arrêté au moyen d'un moyen d'arrêt (10), de préférence d'une vis d'arrêt.

5. Crochet de toit selon la revendication 4,
**caractérisé en ce que**
le moyen d'arrêt (10) est conçu pour appliquer une force sur deux branches (11, 12) du logement de rail (05) afin qu'elles se déplacent l'une vers l'autre.

6. Crochet de toit selon l'une quelconque des revendications précédentes,
**caractérisé en ce que**
le support (02) en forme d'étrier est réalisé en deux parties, une première partie (07) du support (02) en forme d'étrier comprenant des moyens de liaison (29) d'une extrémité, lesdits moyens de liaison (29) servant à être reliés à un support de base (03) qui est compris par le crochet de toit et qui sert à reposer sur la sous-structure du toit, et une deuxième partie (06) du support (02) en forme d'étrier réalisant un logement de rail (05) monobloc d'une extrémité (04), ledit logement de rail (05) monobloc étant réalisé de manière monolithique avec le support (02) en forme d'étrier, notamment avec la deuxième partie (06).

7. Crochet de toit selon la revendication 6,
**caractérisé en ce que**
la première partie (07) et la deuxième partie (06) du support (02) en forme d'étrier, de préférence une zone (28) d'un renflement maximal du support (02) en forme d'étrier, sont reliées l'une à l'autre de manière amovible et/ou réglable en hauteur.
